**Europäisches Patentamt**

**European Patent Office**

**Office européen des brevets**

(11) Publication number : **0 491 973 B1**

# EUROPEAN PATENT SPECIFICATION

(45) Date of publication of patent specification :
**02.11.95 Bulletin 95/44**

(51) Int. Cl.$^6$ : **G01N 27/00**

(21) Application number : **90125214.8**

(22) Date of filing : **21.12.90**

(54) **Integrated pneumatically and electrostatically controlled scanning tunneling microscope and method of making the same.**

(43) Date of publication of application :
**01.07.92 Bulletin 92/27**

(45) Publication of the grant of the patent :
**02.11.95 Bulletin 95/44**

(84) Designated Contracting States :
**DE FR GB**

(56) References cited :
**EP-A- 0 194 323**
**EP-A- 0 383 182**
**DE-A- 3 929 735**
**US-A- 4 912 822**
**US-A- 4 916 002**
**IBM TECHNICAL DISCLOSURE BULLETIN.**
**vol. 32, no. 5A, October 1989, NEW YORK US**
**pages 10 - 12 ; Anonymous : "Stylus for an atomic force microscope"**

(73) Proprietor : **International Business Machines Corporation**
**Old Orchard Road**
**Armonk, N.Y. 10504 (US)**

(72) Inventor : **Greschner, Johann, Dr.**
**Tiergartenweg 14**
**W-7401 Pliezhausen 1 (DE)**
Inventor : **Nonnenmacher, Martin, Dr.**
**Berliner Strasse 9**
**W-7036 Schönaich (DE)**
Inventor : **Wolter, Olaf, Dr.**
**Wacholderweg 8**
**W-7042 Aidlingen 3 (DE)**

(74) Representative : **Schäfer, Wolfgang, Dipl.-Ing.**
**IBM Deutschland**
**Informationssysteme GmbH**
**Patentwesen und Urheberrecht**
**D-70548 Stuttgart (DE)**

## Description

The invention relates to a method of forming an integrated scanning tunneling microscope, and more particularly, to a pneumatically and electrostatically driven version of same.

A scanning tunneling microscope (STM) scans over the surface of a sample with a conductive tip in very close relation to a conductive surface, i. e. within the space of the diameters of several atoms (approximately within 0.5 nm). Under these conditions a tunneling current flows between the tip and the surface, that is, the probability density function of electrons for atoms in the tip overlaps in space the probability density function of electrons for atoms on the surface. As a result, tunneling occurs in the form of electron current flow between the tip and the surface if a suitable bias voltage between these two conductors is applied. Typically, for a tip to sample spacing of a few nm 100 millivolts of bias voltage will provide 1 nanoampere of current.

Scanning tunneling microscopes were first built by Binnig and Rohrer (IBM J. RES. DEVELOP., VOL. 30, NO. 4, JULY 1986, pp. 355 - 369, G. Binnig and H. Rohrer, "SCANNING TUNNELING MICROSCOPY", and IBM TECHNICAL DISCLOSURE BULLETIN, VOL. 27, NO. 10B, MARCH 1985, pp. 5976 - 5977, G. Binnig et al. "FAST SCAN PIEZO DRIVE"). The scanning tunneling microscope described there uses a piezoelectric tripod. This tripod consists of 3 piezoelectric rods of material joined at a junction; each rod expands and contracts along one of 3 Cartesian coordinate axes. The tip is mounted at the junction of the 3 rods. The tip is brought into proximity of the surface by a rough positioner. Thereafter the piezoelectric tripods are used to scan the tip across the surface to develop an image of that surface.

There is one reference teaching a method of making an integrated scanning tunneling microscope. This reference is U. S. Patent 4,912,822 granted April 3, 1990 based on Ser. No. 348,707 which is a division of Ser. No. 149,236. This patent describes an integrated tunneling microscope and an integrated piezoelectric transducer and methods for making both. The device consists of one or two arm piezoelectric bimorph cantilevers formed by micromachining using standard integrated circuit processing steps. These cantilevers are attached to the substrate at one area and are free to move under the influence of piezoelectric forces which are caused by the application of appropriate voltages generated by control circuitry and applied to pairs of electrodes formed as an integral part of the bimorph cantilever structure. The electric fields caused by the control voltages cause the piezoelectric bimorphs to move in any desired fashion within ranges determined by the design. The bimorph cantilevers have tips with very sharp points formed thereon by evaporation deposition of a conductive material through a shadow mask. The tips are moved by the action of the control circuit and the piezoelectric bimorphs so to stay within a very small distance of a conducting surface. All STMs controlled by piezoelectric materials have the disadvantage of having a hysteresis effect which is not ideal for a high absolute accuracy.

There is one reference teaching an integrated form of a scanning tunneling microscope where all movements in the X, Y and Z direction are under the control of electrostatic forces. This reference is European Patent Specification EP-A-0 194 323, patent specification published August 2, 1989 based on European Patent Application 85102554.4 filed March 7, 1985. This patent describes a scanning tunneling microscope integrated on a semiconductor chip into which slots are etched to form a center portion linked by a first pair of stripes to an intermediate portion which in turn is linked by a second pair of stripes to the main body of the chip. The slots are etched to have mutually orthogonal directions to allow the center portion to perform movements in the X and Y direction under the control of electrostatic forces created between the stripes defined by the slots and their opposite walls. A protruding tip is formed on the center portion which is capable of being moved in the Z direction by means of electrostatic forces. It would be extremely difficult to successfully fabricate the integrated STM described in the European Patent cited above. Furthermore, the integrated STM is fabricated from one piece of material in a way that the X, Y and Z movements are not decoupled from each other and are therefore not ideal for tip movement with maximum accuracy.

Thus, a need has arisen for an integrated version of the scanning tunneling microscope using pneumatic and electrostatic forces for moving the tip which can be easily fabricated using semiconductor integrated circuit fabrication processes.

The object of the invention is achieved by a scanning tunneling microscope in accordance with claims 1 to 8.

The invention also comprises two preferred processes for fabricating scanning tunneling microscopes in accordance with the invention.

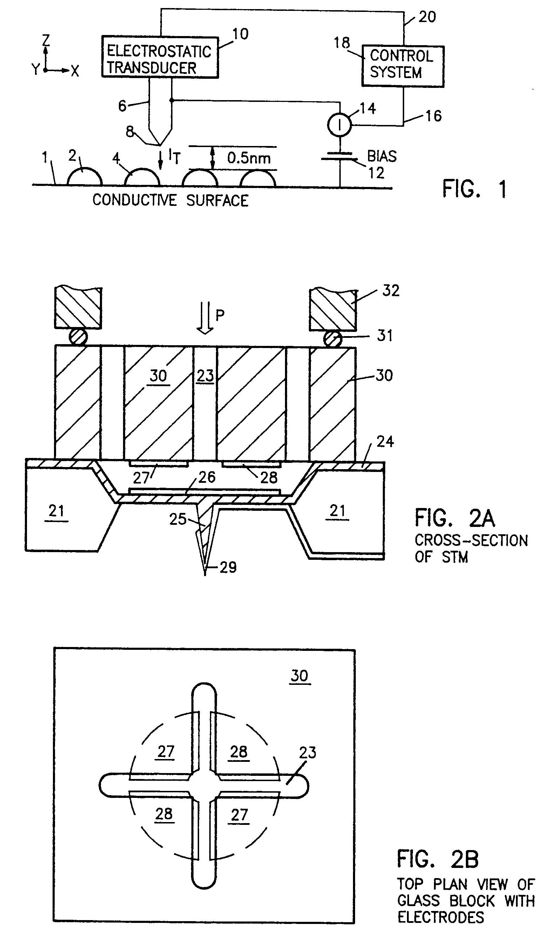

The invention will be described in detail with reference to Figs. 1; 2A, 2B; 3A to 3G; and 4A to 4E.

| | |
|---|---|
| Fig. 1 | is a diagram of a typical scanning tunneling microscope. |
| Fig. 2A | is a cross sectional view of a scanning tunneling microscope according to the teachings of the present invention. |
| Fig. 2B | is a top plan view of the upper part of the STM of Fig. 2A. |
| Figs. 3A to 3G | are cross sectional views of intermediate stages in a first process of fabrication of a pre- |

ferred structure for a scanning tunneling microscope according to the teachings of the present invention.

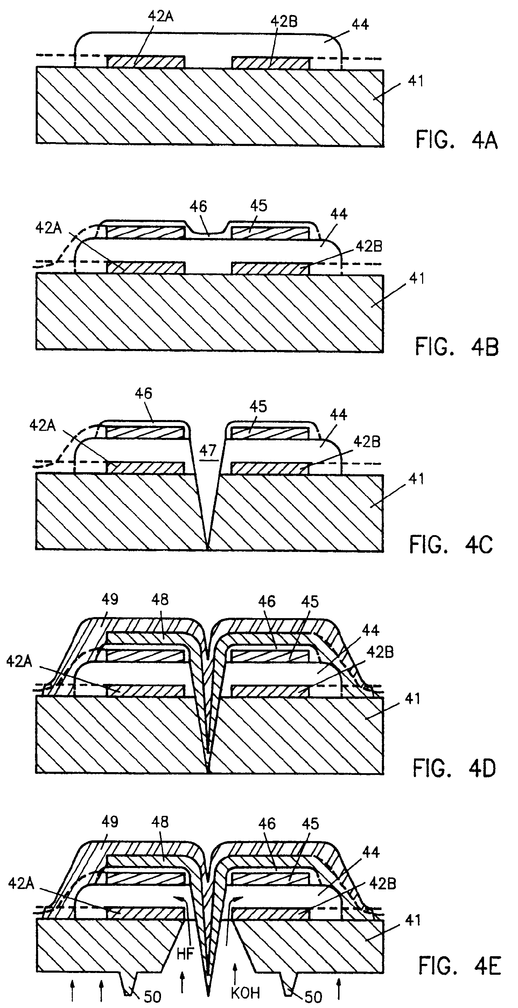

Figs. 4A to 4E    are cross sectional views of intermediate stages in a second process of fabrication of a preferred structure for a scanning tunneling microscope according to the teachings of the present invention.

Fig. 1 depicts a scanning tunneling microscope system. In Fig. 1, a conductive surface (1) having topographical features (2) and (4) etc. is scanned by a conductive tip (6). This tip is very narrow at its point, and preferably terminates in a single atom at the point (8). The point (8) is scanned over the conductive surface (1) by an electrostatic transducer (10) by defining a plurality of raster scan lines in the X-Y plane. The transducer (10) also moves the tip back and forth along Z axis as the tip is scanned in the X-Y plane so as to maintain a relatively constant distance between the tip point (8) and the uppermost portion of the topographical feature over which the tip is scanned. This distance is usually around 0.1 to 1 nm, and must be within the overlap region of the probability density functions of the electrons for the atoms of the tip and the atoms in the uppermost regions of the topographical feature over which the tip currently scans. As long as the distance between the tip and the surface is within this overlap region and a bias voltage is applied across this junction, a tunneling current which is symbolized by the arrow $I_T$ will flow between the tip point (8) and the conductive surface. The magnitude of the tunneling current $I_T$ is exponentially related to the distance between the tip and the surface. The bias voltage is applied between the tip (6) and the conductive surface (1) by a bias voltage source (12). A current sensor (14) senses the magnitude of the tunneling current $I_T$ and outputs a feedback signal on line (16) which is proportional to the magnitude of the tunneling current. A feedback circuit control system (18) receives this feedback signal and generates suitable electrostatic transducer driving signals on the bus (20) to cause the electrostatic transducer to move the tip (6) in such a manner that the tunneling current $I_T$ is maintained at a relatively constant value. The control system (18) also generates suitable electrostatic transducer driving signals on the bus (20) to cause the tip (6) to be raster scanned across the conductive surface (1).

Fig. 2A shows mechanical details of a scanning tunneling structure according to the teachings of the invention. This STM is suitable for the electrostatic X-Y-Z deflection as previously described. The bottom side of a thin membrane (24) holds the STM tip (25). A metallic coating (29) is applied to the tip (25) and to a part of silicon frame (21). A preferred coating for this purpose is a platinum coating with a thickness of about 0.1 μm. The membrane is intimately fixed to glass block (30) by silicon frame (21). The top side of the membrane (24) is several μm below the frame surface. Two pairs of metallic electrodes X1, X2, Y1, Y2 (27, 28) are arranged on glass block (30). The electrode thickness is in the range of about 0.1 to 1 μm, and preferably of about 1 μm. Glass block (30) which is typically several mm thick is provided with bores (23). The bores (23) may have the form of slots as shown in the top plan view of Fig. 2 B.

End pieces (32) shown in Fig. 2A which are fixed to glass block (30) via gaskets (31) form part of a pressure generating chamber (not shown). This chamber can also be a vacuum chamber creating a pressure below one atmosphere which moves the membrane with the tip against the glass block. The STM in accordance with Figs. 3A to 3G would preferably use a pressure ≦= 1 atm, whereas the STM in accordance with Figs. 4A to 4E would preferably use a pressure ≧= 1 atm. After positioning the tip over a desired region of the sample to be studied a coarse approach of the tip in Z direction is used. For coarsely moving the tip in Z direction the pressure applied by the pressure generating chamber to membrane (24) through slots (23) in glass block (30) is varied. During this step the tip (25) which forms an integral part of membrane (24) is approached to the sample to be studied within several μm.

There are a number of technical requirements for the membrane/tip assembly which include the membrane stress and the eigenfrequency $f_o$ of the membrane. The membrane stiffness is neglectable for thin membranes. Typical values for the stress are T = 10 N/mm² and for the eigenfrequency $f_o$ ≧= 10 kHz. Stress and $f_o$ can be varied as required by subjecting the membrane to pressure when coarsely approaching the tip to the substrate as previously described.

In addition, during the scanning operation the membrane's damping can be specifically controlled as a function of the geometry of the environment, for example as a function of the bore diameter in glass block (30).

During the coarse approach the entire STM (including the tip) is advanced to within several μm of the sample surface to be studied using, for example, optical control means. In the inoperative state a maximum voltage of, say, $U_z$ = 200 V is applied between the X-Y electrodes (27, 28) on glass block (30) and the Z electrode (26) on membrane (24, Fig. 2A). Then, for the fine approach, the electrode voltage $U_z$ is reduced until the tip (25) is in the tunnel mode which is assumed to be the case, for example, at $U_z$ = 100 V. The distance between tip and sample is controlled as a function of the $U_z$-voltage. For tip scanning, voltages $U_{x1}$, $U_{x2}$ and $U_{y1}$, $U_{y2}$, respectively, are used. X-scanning is carried out by increasing $U_{x1}$ and decreasing $U_{x2}$. This leads to a slight rotary movement of the membrane (24) and thus to a scanning movement of the tip (25, 29). Y-scanning is carried out analogously.

The exact voltage curves of $U_{x1}$, $U_{x2}$ and $U_{y1}$, $U_{y2}$, respectively, which yield a linear tip scan, have to be determined in a matrix test. It is pointed out that $U_x$ appears as a square value in the matrix.

The maximum K-Y-scan is primarily dependent on the geometry of the STM-arrangement (membrane size, length of the tip etc.). If, for example, the tip length l is half the membrane side length a, then the maximum X-deflection equals the Z-deflection.

The following calculation shows that both the mechanical and the electrical parameters of the STM-arrangement are realizable. The membrane has a tensile stress of $T = 10$ N/mm². The membrane is square-shaped with a side length a.

The flexural wave rate is

$$C_M = \sqrt{\frac{T}{\rho}}$$

The resonance frequency is

$$f_{res} = \frac{C_M}{2a}(\cdot n)$$

The resonance frequency is for a membrane thickness $d = 2$ μm and a membrane side length $a = 2$ mm

$$f_{res} \geq 20 kHz$$

For a membrane thickness $d = 1$ μm and a membrane side length $a = 10$ mm there is still a resonance frequency

$$f_{res} \geq 4 kHz$$

In that case, the maximum deflection $\Delta d$ at a surface load q is

$$\Delta d = \frac{8q \cdot a^2}{\pi^4 \cdot T \cdot d}$$

The force exerted on the membrane when a voltage U is applied leads to a maximum deflection (q = electrostatic force in the plate capacitor)

$$\Delta d = \frac{4\varepsilon_0 \cdot U^2 \cdot a^2}{T \cdot \pi^4 \cdot d \cdot e^2}$$

where e is the distance between the capacitor plates.

Example 1:

e = 5 μm
U = ± 100 V
a = 2 mm        ⟹ Δd = 2.6 μm
T = 10 N/mm²
d = 2 μm

For pneumatically deflecting the membrane by about 1.3 μm a pressure of about 80 Pa would be necessary.

Example 2:

e = 20 μm
a = 10 mm        ⟹ Δd = 8 μm
d = 1 μm
otherwise identical

o Neglecting the plate stiffness (i. e. only the tensile stress of the membrane is considered: this holds for thinner membranes).

o d ≈ const.

The calculations were based on maximum voltages of about 200 V. The electrode spacing was 5 μm and 20 μm, respectively. If the STM is used at normal air pressure, it has to be determined whether a voltage breakdown is taking place. The breakdown strength in a conventional electric actuator with an air gap is limited to approximately $3 \times 10^6$ V/m by the electrical breakdown of air. For 200 V and a 10 μm gap, a breakdown strength of $2 \times 10^7$ V/m is already obtained.

The value of $3 \times 10^6$ V/m no longer applies but begins to increase as the gap separation approaches a critical value. In this conjunction, see S. F. Bart et al. in Sensors and Actuators, 14 (1988) pp 269 - 292. For a gap of 12.5 μm, the value given is $3.2 \times 10^7$ V/m. Other values in this article proceed from a maximum of $3 \times 10^8$ V/m (p 273). These higher values indicate that an STM in accordance with the invention is feasible.

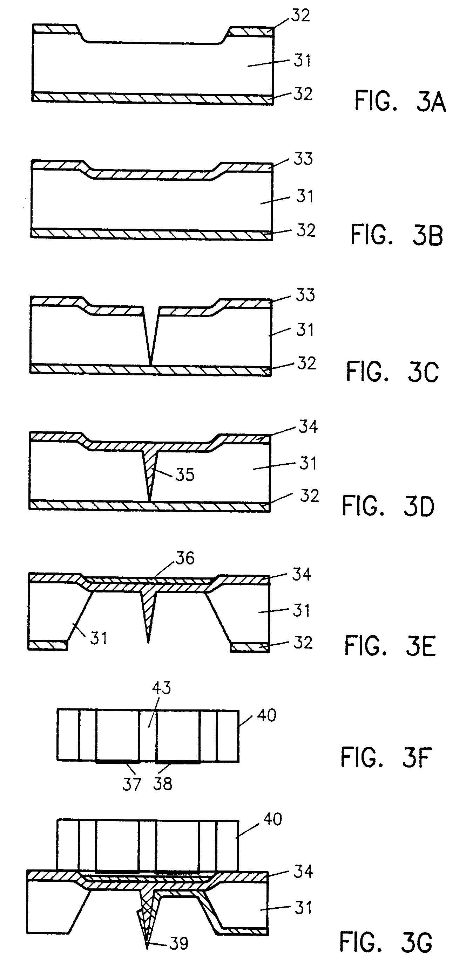

Referring to Figs. 3A to 3G there is shown a first process comprising several steps for making an integrated scanning tunneling microscope using pneumatic and electrostatic control of tip motion in Z-direction and electrostatic control of X- and Y-scan of the tip. Fabrication starts with a substrate (31, Fig. 3A). Preferably this substrate is silicon or some other substrate suitable for forming integrated electronic circuits. The first step in the fabrication sequence is to deposit silicon dioxide layers (32) on either side of the substrate (31). Silicon nitride layers can also be used. Next, a pit of several μm depth is wet- or dry-etched into the front silicon dioxide layer (32) and into substrate (31) using for example buffered hydrofluoric acid for silicon dioxide and 37.5 % b. w. aqueous KOH for a silicon substrate. The size corresponds to the future membrane size (say, 2mm side length). The remaining silicon dioxide layer on the front side is then removed. The flat fine-etched pit is covered with a resistent mask (33, Fig. 3B). For example, silicon dioxide or aluminum can be used as mask materials. An opening is provided in masking layer (33) in the center of the pit, followed by etching a hole through the substrate (31, Fig. 3C). This etching step may be a dry-etching step using chlorine or bromine chemistry. The mask (33) is removed, and the front side including the deep hole is covered with a tensile stressed film (34). The film material which preferably is silicon carbide or silicon nitride is deposited by plasma enhanced chemical vapor deposition. The film thickness is, for example, 2 μm. The hole may have a diameter which is noticeably above 2 μm, depending upon the etch process, so that only the sidewalls and the bottom of the hole are covered with the film material. As a result, the future tip will be hollow, which seems appropriate for weight reasons (Fig. 3D).

Next, the silicon dioxide mask (32) on the back side is opened, and the substrate (31) is thinned up by etching to the membrane (34) through the window thus obtained. A metallic electrode (36), consisting of Au or Al, is vapor-deposited on the front side of the membrane (34, Fig. 3E) using a molybdenum aperture mask. Two pairs of metallic electrodes $X_1$, $X_2$, $Y_1$ and $Y_2$ (37, 38) are formed on glass block (40) by vapor deposition of Au or Al (Fig. 3F) using a molybdenum aperture mask. The dimensions of glass block (40) may be, for example, 3x3x2 mm. As previously mentioned glass block (40) is provided with bores (43) which allow a pneumatical coarse approach of tip (35) in Z direction. Next, glass block (40) is bonded to the silicon frame (31, 34) with X, Y electrodes (37, 38) being positioned above Z electrode (36) on membrane (34) and membrane (34) with Z electrode being arranged on a lower plane. Bonding is "mallory" bonding effected at about 300 °C and 1000 V. Proof of the bonding between glass block and substrate could be established by means of the SiC intermediate layer (Fig. 3G).

As up to this stage the tip (35) does not protrude from its surrounding silicon frame (31), the remaining silicon dioxide mask (32) on the back side is removed and the frame is thinned by etching. As the membrane material is an insulator, the tip (35) and a part of the membrane (34) and of silicon frame (31) on the bottom side have to be provided with an electrically conductive layer (39, Fig. 3G) to obtain voltage for the tunnel current. A preferred material for this layer is platinum which is applied with a thickness of about 0.1 μm.

The deep hole (Fig. 3C) whose imprint forms the future tip (35) may be produced to have a diameter of 20 to 100 μm. In the event that problems occur during scanning as a result of this membrane hole, the hole would have to be closed in part or in full by the following additional steps. Following the silicon carbide or silicon nitride deposition step (34, Fig. 3D), the hole is filled with a polymeric material, preferably with polyimide, and planarized. After a baking step at about 400 °C, a second silicon carbide or silicon nitride layer is applied (not shown). This second silicon carbide or silicon nitride layer over the filled hole is partially opened in a reactive ion etching step, using a suitable mask such as a molybdenum mask with a lattice structure. In an oxygen plasma etching step, the polyimide is removed from the tip for weight reasons. This step yields a lattice spanning the hole, which does not allow a release of the membrane tension during scanning later on. It is assumed however that given a reasonably small hole with a diameter < 50 μm, such a supporting structure will not be required.

Referring to Figs. 4A to 4E there is shown a second process comprising a planar technology for making an integrated scanning tunneling microscope.

A layer of a conductive material, for example a 0.1 μm platinum layer, is applied to a substrate (41) by vapor deposition using a molybdenum aperture mask thereby obtaining four quadrants (42A, 42B, Fig. 4A) which are later on used as the lower electrodes for the X, Y and Z motion of the tip. The substrate is silicon or some other substrate material suitable for forming integrated electronic circuits. A silicon dioxide layer (44) is applied to the surface of the electrodes (42A, 42B) overlapping said electrodes for example by plasma enhanced chemical vapor deposition. This silicon dioxide layer with a thickness in the range of about 2 to 5 μm serves as a spacer layer between the lower and upper electrodes and will be removed later on by selective etching to space the electrodes.

Next, an annular metal conductor (45), for example a 0.1 μm platinum conductor, is applied to silicon dioxide layer (44) by vapor deposition using a molybdenum aperture mask. This annular metal conductor which covers approximately the same area as the lower electrodes (42A, 42B) forms the common counter-electrode for the four quadrant electrodes. A dielectric layer (46), say of silicon carbide or silicon nitride, is deposited on top of said annular metal conductor (45, Fig. 4B) for example by plasma enhanced chemical vapor deposition. This material will not be attacked during the etching of silicon dioxide layer (44) with buffered hydrofluoric acid.

A hole is provided in the center of the circular sandwich by reactive ion etching, followed by reactive ion etching of a tapered hole (47) through the silicon substrate (41), or of an inverted pyramid by anisotropic wet etching with for example 37.5 % b. w. aqueous KOH. This hole which extends nearly through the entire silicon wafer (41) forms a negative of the future tip which will be filled with the tunnel contact material and which is separated from the lower electrodes.

The sandwich including the deep hole is covered with the tunnel contact material (48), for example with a 0.1 $\mu$m platinum layer, which deposited by vapor deposition using a molybdenum aperture mask. The tunnel current is fed through the conductor thus formed from the tip to the sample. To this conductor and to the entire structure a dielectric layer (49) of silicon carbide or silicon nitride is applied, using for example plasma enhanced chemical vapor deposition. The thickness of this layer may be 2 $\mu$m. This layer represents the oscillating membrane (49) to which the upper electrode (45) is connected by dielectric layer (46) and conductor (48, Fig. 4D).

From the bottom side and by means of a structered oxide mask (not shown) the silicon surrounding the tip is removed, for example by etching with an aqueous solution of 37.5 % b. w. KOH. Subsequently, the whole wafer is slightly thinned around the 3 studs (50) using the same solution. By means of these studs the scanning tunneling microscope is positioned on the substrate to be investigated. The silicon dioxide layer (44) between the electrodes (42A, 42B and 45) is completely removed by etching with buffered hydrofluoric acid. This provides a clearance space for the membrane for moving along the H, Y and Z axes when electric fields are applied to the electrodes. The platinum-silicon carbide tip is connected to the membrane and can freely be moved by the same.

On top of the scanning tunneling microscope described with reference to Figs. 4A to 4E a glass block may be arranged to allow pneumatical coarse approach of the membrane/tip assembly along Z-axis (not shown). A cavity is provided between the membrane (49) and the glass block to allow oscillation of the membrane. The glass block may be perforated for varying the damping of the membrane by subjecting the membrane to pressure, or, the cavity between the glass block and the membrane may be evacuated before bonding, with the bonding being used to obtain a vacuum-tight sealing.

Advantages of the scanning tunneling microscope according to this invention are the hysteresis-free X-Y-Z drive and the high mechanical and thermal stability of the sensor head resulting from its low mass and small dimensions. As a result the arrangement is little susceptible to external vibrations. Control circuitry for the current supply for the distance control of the tip is integrated on the same semiconductor substrate. Furthermore, the signals resulting from scanning may be processed in the immediate vicinity of the sensor by circuits integrated on the same substrate.

## Claims

1. Scanning tunneling microscope comprising at least one electron-emitting tip maintained at a relatively constant distance along a Z-axis normal to the sample surface, an XY-drive for scanning said tip in a matrix fashion across said sample surface, means for controlling a tunnel current between said tip and said sample surface to maintain said distance essentially constant,
characterized in that said XY-drive is an electrostatic transducer (10) and consists of at least four electrodes (27, 28; 37, 38; 42A, 42B) spaced from a counter-electrode (26, 36, 45);
said four electrodes (27, 28; 37, 38; 42A, 42B) being upper electrodes arranged on a member (40), or lower electrodes arranged on a substrate (41),
wherein said member (30, 40) is a perforated glass block which forms part of a pressure or vacuum generating chamber.

2. Scanning tunneling microscope of claim 1,
characterized in that said STM is fabricated by micromachining using integrated circuit processing steps.

3. Scanning tunneling microscope of claim 2,
characterized in that said STM is fabricated by a planar batch technique.

4. Scanning tunneling microscope of claims 1 to 3,
characterized in that said membrane (24, 34, 49) consists of a dielectric material, and that said tip (25, 35, 49) forming an integral part of said membrane is provided with an electrically conductive material (29, 39, 48) and connected to individual electrodes to which voltage may be applied for moving said tip along Z-axis normal to the sample surface.

5. Scanning tunneling microscope of claim 4, characterized in that said membrane (24, 34, 49) consists of silicon carbide or silicon nitride, and said electrically conductive material (29,39,48) is platinum.

6. Scanning tunneling microscope of claims 1 to 5, characterized in that for coarse approach of said membrane and integral tip along Z-axis the pressure on said membrane is varied, and that for fine approach of said membrane and integral tip a voltage $U_z$ is applied to Z-electrode (26, 36, 45), the distance between tip and sample being controlled as a function of $U_z$.

7. Scanning tunneling microscope of one or several of claims 1 to 6, characterized in that said membrane (24, 34, 49) is fixed to said glass block by a semiconductor substrate (21, 31, 41), wherein said semiconductor substrate (21, 31, 41) includes electronic devices for the current supply of the distance control of said tip and for processing the signals resulting from scanning.

8. Method of making a scanning tunneling microscope using pneumatic and electrostatic control of tip motion as claimed in claims 1 to 7, comprising the following steps:
   a) depositing masking layers (32) on either side of a semiconductor substrate (31); etching a pit of several μm depth into the front side masking layer (32) and into said substrate (31) in a size which corresponds to the future membrane size;
   b) removing said front side masking layer (32); depositing a resistant masking layer (33) on said etched pit;
   c) providing an opening in said resistant masking layer (33) in the center of said pit; etching a hole (35) through said substrate (31);
   d) removing the remaining masking layer (33); and covering the front side of said substrate (31) including said hole (35) with a tensile stressed film (34);
   e) opening said back side masking layer (32); thinning down said substrate (31) to expose said future membrane (34) and said tip (35); applying a metal layer (36) to said tensile stressed film (34) on the front side and patterning a first electrode so as to extend over said pit;
   f) applying a metal layer to a member (40) and patterning second electrodes (37, 38);
   g) bonding said member (40) with said second electrodes (37, 38) to the substrate frame (31, 34) with said second electrodes (37, 38) being positioned above said first electrode (36) on said membrane (34); and removing said remaining mask (32) from the back side of said substrate (31); thinning said substrate frame (31) by etching; and applying a metal coating (39) on said tip (35) and on a part of said substrate (31).

9. Method of claim 8, wherein step a) of depositing said masking layer (32) comprises forming layers of silicon dioxide or silicon nitride on either side of said silicon substrate (31):

10. Method of claim 8, wherein step b) of depositing a resistant mask material (33) comprises depositing silicon dioxide or aluminum.

11. Method of claim 8, wherein step d) of covering the front side of said substrate (31) including said hole (35) with said tensile stressed film (34) comprises depositing silicon carbide or silicon nitride by plasma enhanced chemical vapor deposition.

12. Method of claim 8 wherein the etching steps of said masking layers comprise wet-etching steps using buffered hydrofluoric acid for silicon dioxide.

13. Method of claim 8 wherein the etching steps of said silicon substrate comprise wet-etching using a 37.5% b. w. aqueous KOH (steps a, e, g) or dry-etching using chlorine or bromine chemistry (step c).

14. Method of claim 8, wherein depositing and patterning on said first and second electrodes comprise vapor depositing a metal, preferably platinum, using an aperture mask (steps e, f).

15. Method of making a scanning tunneling microscope using pneumatic and electrostatic control of tip motion as claimed in claims 1 to 7, comprising the following steps:

a) applying a first metal layer to a substrate (41) and patterning first electrodes (42A, 42B); and applying a first dielectric layer (44) to the surface of said first electrodes (42A, 42B) overlapping said electrodes;

b) applying a second metal layer to said first dielectric layer (44) and patterning said metal layer to form an annular conductor (45) which covers approximately the same area as said first electrodes (42A, 42B) and which forms a second electrode; depositing a second dielectric layer (46) on top of said annular conductor (45);

c) providing an opening in the center of said circular sandwich formed in step b) and etching a hole (47) through said substrate (41);

d) covering said circular sandwich including said hole with tunnel contact material (48); applying a third dielectric layer (49) to said tunnel contact material layer (48) and to the entire structure;

e) removing the substrate material surrounding the tip formed by said tunnel contact material (48) and by said third dielectric layer (49) in said hole (47) by etching using a structured oxide mask; thinning said substrate by etching; and etching off said first dielectric layer (44) so as to provide clearance space for said circular sandwich, comprising a membrane (49), said tunnel contact layer (48) with said tip (47) as integral part of said tunnel contact material and third dielectric layers (49, 48), said second dielectric layer (46), and said annular conductor (45), for moving along X, Y, and Z-axes upon application of electrical fields.

16. Method of claim 15, wherein step a) of depositing a first dielectric layer (44) comprises depositing silicon dioxide which acts as a spacer material and which is removed by etching with buffered hydrofluoric acid at a later stage.

17. Method of claim 15, wherein steps a, b, and d of depositing and patterning of said first electrodes (42A, 42B), of said annular conductor (45), and of said tunnel contact material (48) comprise vapor depositing a metal, preferably platinum, using an aperture mask.

18. Method of claim 15, wherein steps b and d of depositing said first and third dielectric layers (44) and (49) comprise depositing silicon carbide or silicon nitride by plasma enhanced chemical vapor deposition, with said third dielectric layer (49) representing the membrane.

19. Method of claims 15 to 18 further comprising: providing a glass block on top of said scanning tunneling microscope, leaving a cavity between said glass block and said membrane (49), to allow pneumatic coarse approach of the membrane/tip assembly along Z-axis normal to the sample surface.


**Patentansprüche**

1. Rastertunnelmikroskop, das wenigstens eine elektronenemittierende Spitze, die in einem relativ konstanten Abstand entlang einer z-Achse senkrecht zur Probenoberfläche gehalten wird, einen xy-Antrieb zur abrasternden Führung der Spitze in einer matrixartigen Weise über die Probenoberfläche hinweg und Mittel zum Steuern eines Tunnelstromes zwischen der Spitze und der Probenoberfläche, um den Abstand im wesentlichen konstant zu halten, beinhaltet,

dadurch gekennzeichnet, daß der xy-Antrieb ein elektrostatischer Meßwandler (10) ist und aus wenigstens vier Elektroden (27, 28; 37, 38; 42A, 42B) besteht, die mit Abstand von einer Gegenelektrode (26, 36, 45) angeordnet sind;

wobei die vier Elektroden (27, 28; 37, 38; 42A, 42B) obere Elektroden, die auf einem Element (40) angeordnet sind, oder untere Elektroden darstellen, die auf einem Substrat (41) angeordnet sind,

wobei das Element (30, 40) ein perforierter Glasblock ist, der einen Teil einer Druck- oder Vakuumerzeugungskammer bildet.

2. Rastertunnelmikroskop nach Anspruch 1,
dadurch gekennzeichnet, daß das RTM durch Mikro-Materialbearbeitung unter Verwendung von Verfahrensschritten für integrierte Schaltkreise gefertigt ist.

3. Rastertunnelmikroskop nach Anspruch 2,
dadurch gekennzeichnet, daß das RTM durch eine planare Stapeltechnik gefertigt wird.

**4.** Rastertunnelmikroskop nach den Ansprüchen 1 bis 3,
dadurch gekennzeichnet, daß die Membran (24, 34, 49) aus einem dielektrischen Material besteht und daß die Spitze (25, 35, 49), die einen integralen Teil der Membran bildet, mit einem elektrisch leitfähigen Material (29, 39, 48) versehen ist und mit einzelnen Elektroden verbunden ist, an die zum Bewegen der Spitze entlang der z-Achse senkrecht zu der Probenoberfläche eine Spannung angelegt werden kann.

**5.** Rastertunnelmikroskop nach Anspruch 4,
dadurch gekennzeichnet, daß die Membran (24, 34, 49) aus Siliciumcarbid oder Siliciumnitrid besteht und das elektrisch leitfähige Material (29, 39, 48) Platin ist.

**6.** Rastertunnelmikroskop nach den Ansprüchen 1 bis 5,
dadurch gekennzeichnet, daß für eine Grobannäherung der Membran und der integralen Spitze entlang der z-Achse der Druck auf die Membran variiert wird und daß für eine Feinannäherung der Membran und der integralen Spitze eine Spannung $U_z$ an die z-Elektrode (26, 36, 45) angelegt wird, wobei der Abstand zwischen Spitze und Probe als Funktion von $U_z$ gesteuert wird.

**7.** Rastertunnelmikroskop nach einem oder mehreren der Ansprüche 1 bis 6,
dadurch gekennzeichnet, daß die Membran (24, 34, 49) durch ein Halbleitersubstrat (21, 31, 41) an dem Glasblock angebracht ist, wobei das Halbleitersubstrat (21, 31, 41) elektronische Bauelemente für die Stromversorgung der Abstandssteuerung der Spitze und zur Verarbeitung der aus der Abrasterung resultierenden Signale beinhaltet.

**8.** Verfahren zum Herstellen eines eine pneumatische und elektrostatische Steuerung der Spitzenbewegung verwendenden Rastertunnelmikroskops, wie es in den Ansprüchen 1 bis 7 beansprucht ist, das die folgenden Schritte umfaßt:
a) Aufbringen von Maskierungsschichten (32) auf jeder Seite eines Halbleitersubstrates (31); Ätzen einer Vertiefung von mehreren μm Tiefe in die frontseitige Maskierungsschicht (32) und in das Substrat (31) mit einer Abmessung, die der späteren Membranabmessung entspricht;
b) Entfernen der frontseitigen Maskierungsschicht (32); Aufbringen einer beständigen Maskierungsschicht (33) auf der geätzten Vertiefung;
c) Bereitstellen einer Öffnung in der beständigen Maskierungsschicht (33) in der Mitte der Vertiefung; Ätzen eines Loches (35) durch das Substrat (31) hindurch;
d) Entfernen der verbliebenen Maskierungsschicht (33); und Bedecken der Frontseite des Substrates (31) einschließlich des Loches (35) mit einem unter Zugsgannung stehenden Film (34);
e) Öffnen der rückseitigen Maskierungsschicht (32); Dünnermachen des Substrates (31), um die spätere Membran (34) und die Spitze (35) freizulegen; Anbringen einer Metallschicht (36) auf dem unter Zugspannung stehenden Film (34) auf der Frontseite und Strukturieren einer ersten Elektrode derart, daß sie sich über die Vertiefung erstreckt;
f) Anbringen einer Metallschicht an einem Element (40) und Strukturieren von zweiten Elektroden (37, 38);
g) Bonden des Elementes (40) mit den zweiten Elektroden (37, 38) an den Substratrahmen (31, 34), wobei die zweiten Elektroden (37, 38) oberhalb der ersten Elektrode (36) auf der Membran (34) positioniert sind; und Entfernen der verbliebenen Maske (32) von der Rückseite des Substrates (31); Dünnermachen des Substratrahmens (31) durch Ätzen; und Anbringen einer Metallbeschichtung (39) auf der Spitze (35) und auf einem Teil des Substrates (31).

**9.** Verfahren nach Anspruch 8, wobei der Schritt a) des Aufbringens der Maskierungsschicht (32) das Bilden von Schichten aus Siliciumdioxid oder Siliciumnitrid auf jeder Seite des Siliciumsubstrates (31) beinhaltet.

**10.** Verfahren nach Anspruch 8, wobei der Schritt b) des Aufbringens eines beständigen Maskenmaterials (33) das Aufbringen von Siliciumdioxid oder Aluminium beinhaltet.

**11.** Verfahren nach Anspruch 8, wobei der Schritt d) des Bedekkens der Frontseite des Substrates (31) einschließlich des Loches (35) mit dem unter Zugspannung stehenden Film (34) das Aufbringen von Siliciumcarbid oder Siliciumnitrid durch plasmaunterstützte chemische Gasphasenabscheidung beinhaltet.

**12.** Verfahren nach Anspruch 8, wobei die Schritte zum Ätzen der Maskierungsschichten Naßätzschritte unter Verwendung von gepufferter Fluorwasserstoffsäure für Siliciumdioxid beinhalten.

**13.** Verfahren nach Anspruch 8, wobei die Schritte zum Ätzen des Siliciumsubstrates Naßätzen unter Verwendung von 37,5 Gew.-%igem wäßrigem KOH (Schritte a, e, g) oder Trockenätzen unter Verwendung einer Chlor- oder Brom-Chemie (Schritt c) beinhalten.

**14.** Verfahren nach Anspruch 8, wobei das Aufbringen und Strukturieren auf den ersten und zweiten Elektroden die Aufdampfung eines Metalls, vorzugsweise Platin, unter Verwendung einer Aperturmaske beinhaltet (Schritte e, f).

**15.** Verfahren zur Herstellung eines eine pneumatische und elektrostatische Steuerung der Spitzenbewegung verwendenden Rastertunnelmikroskops, wie es in den Ansprüche 1 bis 7 beansprucht ist, das die folgenden Schritte umfaßt:
a) Anbringen einer ersten Metallschicht auf einem Substrat (41) und Strukturieren von ersten Elektroden (42A, 42B); und Anbringen einer ersten dielektrischen Schicht (44) auf der Oberfläche der ersten Elektroden (42A, 42B), welche die Elektroden überlappt;
b) Anbringen einer zweiten Metallschicht auf der ersten dielektrischen Schicht (44) und Strukturieren der Metallschicht, um einen ringförmigen Leiter (45) zu bilden, der ungefähr die gleiche Fläche wie die ersten Elektroden (42A, 42B) überdeckt und der eine zweite Elektrode bildet; Aufbringen einer zweiten dielektri- schen Schicht (46) oben auf dem ringförmigen Leiter (45);
c) Bereitstellen einer Öffnung in der Mitte der in Schritt b) gebildeten, kreisförmigen Sandwichstruktur und Ätzen eines Loches (47) durch das Substrat (41) hindurch;
d) Bedecken der kreisförmigen Sandwichstruktur einschließlich des Loches mit Tunnelkontaktmaterial (48); Anbringen einer dritten dielektrischen Schicht (49) auf der Schicht (48) aus Tunnelkontaktmaterial und auf der gesamten Struktur;
e) Entfernen des Substratmaterials, das die Spitze umgibt, die durch das Tunnelkontaktmaterial (48) und durch die dritte dielektrische Schicht (49) in dem Loch (47) gebildet ist, durch Ätzen unter Verwendung einer strukturierten Oxidmaske; Dünnermachen des Substrates durch Ätzen; und Abätzen der ersten dielektrischen Schicht (44), um für die kreisförmige Sandwichstruktur, die eine Membran (49), die Tunnelkontaktschicht (48) mit der Spitze (47) als integralem Teil des Tunnelkontaktmaterials und der dritten dielektrischen Schichten (49, 48), die zweite dielektrische Schicht (46) und den ringförmigen Leiter (45) beinhaltet, Freiraum zur Bewegung entlang einer x-, einer y-und einer z-Achse bei Anlegen von elektrischen Feldern bereitzustellen.

**16.** Verfahren nach Anspruch 15, wobei der Schritt a) des Aufbringens einer ersten dielektrischen Schicht (44) das Aufbringen von Siliciumdioxid beinhaltet, das als Abstandshaltermaterial wirkt und das durch Ätzen mit gepufferter Fluorwasserstoffsäure in einer späteren Stufe entfernt wird.

**17.** Verfahren nach Anspruch 15, wobei die Schritte a, b und d des Aufbringens und Strukturierens der ersten Elektroden (42A, 42B), des ringförmigen Leiters (45) und des Tunnelkontaktmaterials (48) die Aufdampfung eines Metalls, vorzugswelse Platin, unter Verwendung einer Aperturmaske beinhalten.

**18.** Verfahren nach Anspruch 15, wobei die Schritte b und d des Aufbringens der ersten und der dritten dielektrischen Schicht (44) und (49) das Aufbringen von Siliciumcarbid oder Siliciumnitrid durch plasmaunterstützte chemische Gasphasenabscheidung beinhalten, wobei die dritte dielektrische Schicht (49) die Membran darstellt.

**19.** Verfahren nach den Ansprüchen 15 bis 18, das des weiteren beinhaltet:
Bereitstellen eines Glasblockes oben auf dem Rastertunnelmikroskop, wobei ein Hohlraum zwischen dem Glasblock und der Membran (49) belassen wird, um eine pneumatische Grobannäherung des Membran/Spitzenaufbaus entlang der z-Achse senkrecht zur Probenoberfläche zu erlauben.

## Revendications

**1.** Microscope à balayage à effet tunnel, comprenant au moins une pointe émettrice d'électrons, maintenue à une distance relativement constante sur un axe Z perpendiculaire à la surface de l'échantillon, un entraînement en XY, pour permettre l'exploration par ladite pointe selon un mode matriciel sur ladite surface d'échantillon, des moyens pour commander le courant de tunnel entre ladite pointe et ladite surface d'échantillon afin de maintenir ladite distance sensiblement constante,

caractérisé en ce que ledit entraînement XY est un transducteur électrostatique (10) et est constitué d'au moins quatre électrodes (27, 28; 37, 38; 42A, 42B) espacées vis-à-vis d'une contre-électrode (26, 36, 45);

lesdites quatre électrodes (27, 28; 37, 38; 42A, 42B) étant des électrodes supérieures, agencées sur un organe (40), ou des électrodes inférieures, agencées sur un substrat (41),

dans lequel ledit organe (30, 40) est un bloc de verre perforé, faisant partie d'une chambre de production de pression ou de vide.

2. Microscope à balayage à effet tunnel selon la revendication 1,
caractérisé en ce que ledit MBT est fabriqué par micro-usinage en utilisant les étapes de traitement destinées à un circuit intégré.

3. Microscope à balayage à effet tunnel selon la revendication 2,
caractérisé en ce que ledit MBT est fabriqué par une technique par lots planaire.

4. Microscope à balayage à effet tunnel selon les revendications 1 à 3,
caractérisé en ce que ladite membrane (24, 34, 49) est constituée d'un matériau diélectrique, et en ce que ladite pointe (25, 35, 49) formant partie intégrale de ladite membrane est pourvue d'un matériau conducteur de l'électricité (39, 29, 48) et reliée à des électrodes individuelles, auxquelles une tension peut être appliquée pour déplacer ladite pointe dans l'axe Z, perpendiculairement à la surface de l'échantillon.

5. Microscope à balayage à effet tunnel selon la revendication 4,
caractérisé en ce que ladite membrane (24, 34, 49) est constituée de carbure de silicium ou de nitrure de silicium et ledit matériau conducteur de l'électricité (29, 39, 49) est du platine.

6. Microscope à balayage à effet tunnel selon les revendications 1 à 5,
caractérisé en ce que, pour effectuer une approche grossière de ladite membrane et de ladite pointe dans l'axe Z, la pression appliquée sur ladite membrane est soumise à variation et en ce que, pour effectuer une approche fine de ladite membrane et de ladite pointe, une tension $U_z$ est appliquée à l'électrode Z (26, 36, 45), la distance entre la pointe et l'échantillon étant commandée en fonction de $U_z$.

7. Microscope à balayage à effet tunnel selon l'une ou plusieurs des revendications 1 à 6,
caractérisé en ce que ladite membrane (24, 34, 49) est fixée audit bloc de verre par un substrat semi-conducteur (21, 31, 41), dans lequel ledit substrat semi-conducteur (21, 31, 41) comprend des dispositifs électroniques pour l'amenée de courant à la commande de distance de ladite pointe et pour traiter les signaux résultant de l'exploration.

8. Procédé de fabrication d'un microscope à balayage à effet tunnel utilisant une commande pneumatique et électrostatique du déplacement de la pointe selon les revendications 1 à 7, comprenant les étapes suivantes :

a) dépôt de couches de masquage (32) de chaque côté d'un substrat semi-conducteur (31); morsure chimique d'une cavité de plusieurs µm de profondeur dans la couche de masquage de face avant (32) et dans ledit substrat (31), d'une taille correspondant à la taille de la future membrane;

b) enlèvement de ladite couche de masquage de face avant (32); dépôt d'une couche de masquage résistante (33) sur ladite cavité creusée par morsure chimique;

c) constitution d'une ouverture dans ladite couche de masquage résistante (33), au centre de ladite cavité; creusement par morsure d'un trou (35) dans ledit substrat (31);

d) enlèvement du reste de couche de masquage (33); et couverture de la face avant dudit substrat (31), y compris ledit trou (35), par un film (34) soumis à une contrainte de traction;

e) ouverture de ladite couche de masquage de face arrière (32) ; amincissement de la masse dudit substrat (31) pour exposer ladite future membrane (34) et ladite pointe (35); application d'une couche métallique (36) sur ledit film soumis à une contrainte de tension (34), en face avant et création d'un motif de première électrode de façon à s'étendre sur ladite cavité;

f) application d'une couche métallique à un organe (40) et création d'un motif de deuxièmes électrodes (37, 38);

g) liaison dudit organe (40), avec lesdites deuxièmes électrodes (37, 38), au cadre de substrat (31, 34), lesdites deuxièmes électrodes (37, 38) étant positionnées au-dessus desdites premières électrodes (36), sur ladite membrane (34); et enlèvement dudit reste de masque (37) de la face arrière dudit substrat (31); amincissement dudit cadre de substrat (31) par morsure chimique; et application d'un revêtement métallique (39) sur ladite pointe (35) et sur une partie dudit substrat (31).

9. Procédé selon la revendication 8, dans lequel ladite étape a) de dépôt de ladite couche de masquage (32) comprend la formation de couches de dioxyde de silicium ou de nitrure de silicium, des deux côtés dudit substrat de silicium (31).

10. Procédé selon la revendication 8, dans lequel l'étape b) de dépôt d'un matériau de masquage résistant (33) comprend le dépôt de dioxyde de silicium ou d'aluminium.

11. Procédé selon la revendication 8, dans lequel ladite étape d) de recouvrement de la face avant dudit substrat (31), y compris ledit trou (35), par ledit film soumis à une contrainte de tension (34) comprend le dépôt de carbure de silicium ou de nitrure de silicium par dépôt chimique en phase vapeur, amélioré par utilisation de plasma.

12. Procédé selon la revendication 8, dans lequel les étapes de morsure desdites couches de masquage comprennent des étapes de morsures par voie humide utilisant de l'acide fluorhydrique tamponné pour le dioxyde de silicium.

13. Procédé selon la revendication 8, dans lequel les étapes de morsures dudit substrat de silicium comprennent la morsure, par voie humide, en utilisant du KOH à 37,5 % en poids (étapes a, e, g), ou par morsure à sec, en utilisant un produit chimique à base de chlorure ou de bromure (étape c).

14. Procédé selon la revendication 8, dans lequel le dépôt et la création de motifs sur lesdites première et deuxième électrodes comprend le dépôt en phase vapeur d'un métal, de préférence du platine, par utilisation d'un masque à ouverture (étapes e, f).

15. Procédé de fabrication d'un microscope à balayage à effet tunnel, utilisant une commande pneumatique et électrostatique du déplacement de la pointe, selon les revendications 1 à 7, comprenant les étapes suivantes :
a) application d'une première couche métallique à un substrat (41) et création de motifs de premières électrodes (42A, 42B); et application d'une première couche diélectrique (44) sur la surface desdites premières électrodes (42A, 42B) recouvrant lesdites électrodes;
b) application d'une deuxième couche métallique à ladite première couche métallique (44) et création de motifs de ladite couche métallique pour former un conducteur annulaire (45), qui recouvre à peu près la même aire que lesdites premières électrodes (42A, 42B) et qui forme une deuxième électrode; dépôt d'une deuxième couche diélectrique (46) sur le dessus dudit conducteur annulaire (45);
c) constitution d'une ouverture au centre dudit sandwich circulaire formé à l'étape b) et creusement par morsure d'un trou (47) dans ledit substrat (41);
d) recouvrement dudit sandwich circulaire, y compris ledit trou par un matériau de contact à effet tunnel (48); application d'une troisième couche diélectrique (49), sur ladite couche de matériau de contact à effet tunnel (48) et sur la totalité de la structure;
e) enlèvement du matériau de substrat entourant la pointe formée par ledit matériau de contact à effet tunnel (48) et par ladite troisième couche diélectrique (49) dans ledit trou (47), par morsure en utilisant un masque d'oxyde structuré; amincissement dudit substrat par morsure; et enlèvement par morsure de ladite première couche diélectrique (44), de façon à créer un espace de jeu pour ledit sandwich circulaire, comprenant la membrane (49), ladite couche de contact à effet tunnel (48), ladite pointe (47) faisant partie intégrante dudit matériau de contact à effet tunnel, et lesdites troisièmes couches diélectriques (49, 48), ladite deuxième couche diélectrique (46) et ledit conducteur annulaire (45), pour permettre un déplacement suivant les axes X, Y et Z lors de l'application de champs électriques.

16. Procédé selon la revendication 15, dans lequel l'étape a) de dépôt d'une première couche diélectrique (44) comprend le dépôt de dioxyde de silicium agissant comme matériau d'espacement et enlevé par morsure à l'aide d'acide fluorhydrique tamponné à une étape ultérieure.

17. Procédé selon la revendication 15, dans lequel les étapes a, b, et d de dépôt et de création de motifs desdites premières électrodes (42A, 42B), dudit conducteur annulaire (45) et dudit matériau de contact à effet tunnel (48), comprennent le dépôt en phase vapeur d'un métal, de préférence du platine, par utilisation d'un masque à ouverture.

18. Procédé selon la revendication 15, dans lequel les étapes b et d de dépôt desdites première et troisième couches diélectriques (44) et (49) comprennent le dépôt de carbure de silicium ou de nitrure de silicium par dépôt chimique en phase vapeur, amélioré par utilisation de plasma, ladite troisième couche diélectrique (49) représentant la membrane.

19. Procédé selon les revendications 15 à 18, comprenant en outre :
fourniture d'un bloc de verre au-dessus dudit microscope à balayage à effet tunnel, maintien d'une cavité entre ledit bloc de verre et ladite membrane (49), pour permettre une approche pneumatique grossière dudit assemblage membrane/pointe, suivant l'axe Z perpendiculaire à la surface d'échantillon.

FIG. 1

FIG. 2A
CROSS-SECTION
OF STM

FIG. 2B
TOP PLAN VIEW OF
GLASS BLOCK WITH
ELECTRODES

32

31

32

FIG. 3A

33

31

32

FIG. 3B

33

31

32

FIG. 3C

34

35

31

32

FIG. 3D

36

34

31

31

32

FIG. 3E

43

40

37 38

FIG. 3F

40

34

31

39

FIG. 3G

FIG. 4A

FIG. 4B

FIG. 4C

FIG. 4D

FIG. 4E